# DEMANDE DE BREVET EUROPEEN

(11) **EP 4 751 983 A1**
(43) Date de publication de la demande: **03.06.2026**
(21) Numéro de dépôt: 25219770.2
(22) Date de dépôt: 01.12.2025
(51) Int. Cl.: B60L 53/10, B60L 53/62, B60L 53/63, B60L 53/66, B60L 53/67

(54) **INSTALLATION ET STATION DE RECHARGE POUR VÉHICULES ÉLECTRIQUES**

(30) Priorité: 02.12.2024 FR 2413296
(71) Demandeur: Commissariat à l'Energie Atomique et aux Energies Alternatives, 75015 Paris (FR)
(72) Inventeur: GUILLEMIN, Sylvain, 38054 GRENOBLE CEDEX 09 (FR)
(74) Mandataire: Lavoix

(57) **Abrégé**

La présente invention concerne une installation de recharge (12) pour véhicules électriques, l'installation de recharge (12) comprenant :
- un premier nombre de point de charge (20),
- un deuxième nombre d'interfaces de charge (24), chaque interface de charge (24) comportant un connecteur adapté pour être branché à un véhicule électrique pour permettre la recharge du véhicule électrique, le deuxième nombre étant strictement supérieur au premier nombre,
- un multiplexeur (26) propre à relier les interfaces de charge (24) à l'au moins un point de charge (20), et
- un calculateur (28), le calculateur (28) étant propre à recevoir des instructions de charge d'un véhicule électrique par un système de contrôle externe (14) et à contrôler le multiplexeur (26) et l'au moins un point de charge (20) en fonction des instructions du système de contrôle externe (14).

## Description

La présente invention concerne une installation de recharge pour véhicules électriques et une station associée.

Avec le développement du véhicule électrique, il convient d'adapter les infrastructures existantes, et notamment les places de parking.

Pour cela, il est connu d'ajouter des points de charge à chaque emplacement que l'on souhaite électrifier.

Le véhicule électrique vient alors se garer sur la place de parking et se charger sur le point de charge.

Toutefois, en pratique, la place de parking ainsi équipée n'est pas toujours valorisée, que ce soit parce qu'elle est vide ou que le véhicule garé dessus n'a pas - ou surtout plus - besoin d'une recharge.

Ceci est, par exemple, le cas quand un véhicule a fini sa recharge, mais que pour une question d'horaire ou de convenance personnelle son propriétaire le laisse sur la place de parking, monopolisant ainsi un point de charge qui devient alors inaccessible à d'autres utilisateurs.

Ce peut aussi être le cas lorsque de nombreuses voitures arrivent simultanément dans la station de recharge et que seulement quelques-unes pourront avoir accès aux places de parking avec points de charge, alors que le temps disponible aurait permis de toutes les charger, au moins partiellement, moyennant des permutations de positions.

Multiplier les places de parking équipées d'un point de charge résulte cependant dans une situation dans laquelle un investissement relativement important a été effectué pour installer les points de charge alors que ceux-ci sont sous-utilisés.

Il existe donc un besoin pour une installation de recharge pour véhicules électriques aisée à installer avec un nombre de points de charge réduit tout en optimisant leur utilisation et maximisant le nombre de places de parking ayant accès à l'électricité. Un tel besoin se retrouve en particulier dans le contexte de l'augmentation de capacité de stations de recharge pré-existantes.

A cet effet, la description a pour objet une installation de recharge pour véhicules électriques, l'installation de recharge comprenant :
- un premier nombre de point de charge, le premier nombre étant supérieur ou égal à 1,
- un deuxième nombre d'interfaces de charge, le deuxième nombre étant supérieur ou égal à 2, chaque interface de charge comportant un connecteur adapté pour être branché à un véhicule électrique pour permettre la recharge du véhicule électrique, le deuxième nombre étant strictement supérieur au premier nombre,

- un multiplexeur propre à relier les interfaces de charge à l'au moins un point de charge, et
- un calculateur, le calculateur étant propre à recevoir des instructions de charge d'un véhicule électrique par un système de contrôle externe et à contrôler le multiplexeur et l'au moins un point de charge en fonction des instructions du système de contrôle externe.

Suivant d'autres aspects avantageux, l'installation de recharge comprend une ou plusieurs des caractéristiques suivantes, prises isolément ou suivant toutes les combinaisons techniquement possibles :
- le calculateur est propre à communiquer avec le système de contrôle externe et l'au moins un point de charge par un protocole OCPP.
- les instructions de charge du système de contrôle externe comportent des instructions de contrôle d'un deuxième nombre de points de charge, le calculateur étant propre à convertir les instructions de contrôle du système de contrôle externe en instructions de contrôle de chaque point de charge.
- le calculateur est propre à convertir des informations provenant des points de charge en informations provenant d'un deuxième nombre de points de charge et à envoyer les informations converties au système de contrôle externe.
- le multiplexeur est propre à basculer au moins un point de charge d'une interface de charge à une autre interface de charge à réception d'un ordre de basculement, le calculateur étant propre à déterminer une stratégie de basculement comportant l'ensemble des ordres de basculement du multiplexeur et des points de charge à partir des ordres reçus du système de contrôle externe.
- le calculateur est propre à optimiser la stratégie de basculement pour qu'au moins une contrainte soit respectée et/ou un objectif soit atteint.
- une contrainte est que la puissance totale consommée par l'installation de recharge reste inférieure ou égale à une puissance prédéfinie.
- le calculateur est propre à optimiser la stratégie de basculement pour qu'au moins un objectif soit atteint.
- un objectif est de maximiser la puissance utilisée par l'installation de recharge (12).
- un objectif est un objectif dépendant d'au moins un utilisateur du véhicule électrique à charger.
- chaque interface de charge est propre à fonctionner selon un mode de charge monophasée et selon un mode de charge triphasée, la stratégie de basculement déterminant également des ordres de basculement entre les modes de charge.
- dans le mode de charge monophasée, le calculateur est également propre à choisir une phase parmi les phases disponibles pour réaliser la charge.
- chaque interface de charge comporte au moins un connecteur et un indicateur de fonctionnement.
- l'installation de recharge comporte, en outre, une interface utilisateur, le calculateur étant propre à transmettre des informations obtenues par l'interface utilisateur au système de contrôle externe.

La description a également pour objet une station de recharge pour véhicules électriques, la station de recharge comprenant :
- un système de contrôle externe, et
- une installation de recharge telle que précédemment décrite.

Dans la présente description, l'expression « propre à » signifie indifféremment « adapté pour », « adapté à » ou « configuré pour ».

L'invention apparaîtra plus clairement à la lecture de la description qui va suivre, donnée uniquement à titre d'exemple non limitatif, et faite en référence aux dessins dans lesquels :
- la figure 1 est une représentation schématique d'un exemple de station de recharge pour véhicules électriques, et
- la figure 2 est une représentation schématique d'un autre exemple d'infrastructure.

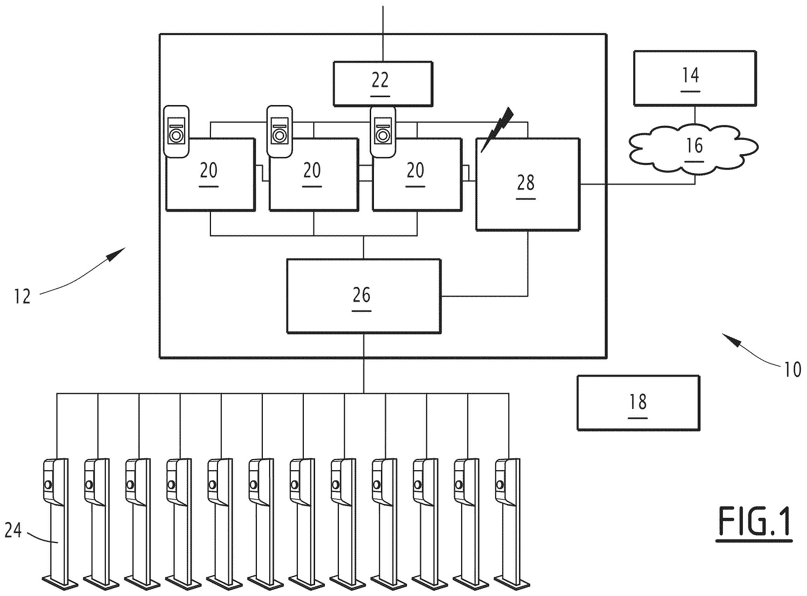

Une station de recharge 10 pour véhicules électriques est représentée sur la figure 1.

La station de recharge 10 sert à charger un ensemble de véhicules électriques pouvant se garer sur des places de parkings, et plus spécifiquement les batteries de ces véhicules électriques.

La nature de la recharge effectuée est ici indifférente, que ce soit une recharge par du courant alternatif (recharge AC) ou du courant continu (recharge DC).

La station de recharge 10 est compatible avec tout type de recharge.

La station de recharge 10 comporte une installation de recharge 12 et un système de contrôle externe 14.

L'installation de recharge 12 est installée sur le parking accueillant les véhicules tandis que le système de contrôle externe 14 est à distance.

L'installation de recharge 12 et le système de contrôle externe 14 sont en communication comme l'illustre le nuage 16.

La communication entre l'installation de recharge 12 et le système de contrôle externe 14 se fait par échanges selon le protocole OCPP.

L'abréviation OCPP renvoie à la dénomination anglaise correspondante de « *Open Charge Point Protocol* » qui signifie littéralement Protocole ouvert de point de charge.

L'installation de recharge 12 comporte une interface utilisateur 18, des points de charge 20, un dispositif de protection électrique 22, des interfaces de charge 24, un multiplexeur 26 et un calculateur 28.

L'interface utilisateur 18 est, par exemple, un lecteur de badge.

L'interface utilisateur 18 peut également servir à demander ce que souhaite l'utilisateur et à lui fournir des informations, notamment par affichage sur un écran.

Un point de charge 20 est un dispositif propre à servir d'alimentation pour charger un véhicule électrique.

Pour cela, le point de charge 20 comporte généralement un disjoncteur différentiel et un contacteur de puissance.

Le nombre de points de charge 20 est noté n, n étant un nombre entier supérieur ou égal à 1.

Selon l'exemple de la figure 1, le nombre n de points de charge 20 est égal à 3.

Le dispositif de protection 22 sert à protéger électriquement les points de charge 20.

Le dispositif de protection 22 assure notamment une protection des points de charge 20 contre les surcharges.

Typiquement, le dispositif de protection 22 est un disjoncteur magnétothermique configuré pour ouvrir un circuit électrique lorsque le courant consommé dépasse un seuil.

Chaque interface de charge 24 est pourvue d'au moins un connecteur.

Selon les cas, le connecteur est une prise ou un socle.

Une prise est un câble qui sort de l'interface de charge 24 avec un connecteur mâle à son extrémité, connecteur qui peut être directement inséré dans le véhicule. Cela permet d'éviter à l'utilisateur de l'installation de recharge 12 d'avoir à sortir son propre câble.

Un socle est un connecteur positionné sur l'interface de charge 24, le connecteur étant agencé pour recevoir le câble de l'utilisateur pour relier son véhicule à un point de charge.

Dans chacun des cas, le connecteur est adapté pour être branché à un véhicule électrique pour permettre la recharge du véhicule électrique.

Par exemple, le connecteur est une prise type 1 (parfois appelé prise T1) ou une prise type 2 (parfois appelé prise T2), un socle T2, une prise CHAdeMO ou une prise CCS2.

De préférence, chaque interface de charge 24 est également pourvue d'un indicateur de fonctionnement.

L'indicateur de fonctionnement sert à indiquer si l'interface de charge 24 est en fonctionnement ou non.

L'indicateur de fonctionnement est par exemple une unité lumineuse, telle qu'une diode électroluminescente.

Le nombre d'interfaces de charge 24 dans l'installation de recharge 12 est notée N, N étant un entier supérieur ou égal à 2.

L'installation de recharge 12 présente la spécificité que le nombre N d'interfaces de charge 24 est strictement supérieur au nombre n de points de charge 20.

Dans l'exemple de la figure 1, le nombre N est égal à 12.

Le multiplexeur 26 est disposé entre les points de charge 20 et les interfaces de charge 24.

Le multiplexeur 26 effectue du multiplexage temporel, c'est-à-dire que le multiplexeur 26 sert à partager le temps des points de charge 20 entre les différentes interfaces de charge 24.

Le partage est obtenu par basculement de la connexion d'un connecteur à un autre, par exemple par utilisation de dispositifs électromécaniques ou de contacteurs à semiconducteur.

Le multiplexeur 26 permet ainsi de relier un connecteur d'une interface de charge 24 à un point de charge 20 dans une configuration et d'interrompre la connexion dans une autre configuration.

Dans la configuration reliée, 7 liaisons viennent relier le connecteur au point de charge 20.

Plus précisément, le connecteur est relié au point de charge 20 par 5 liaisons permettant le passage d'un courant relativement fort, à savoir 3 phases, le neutre et la terre.

Le connecteur est également relié au point de charge 20 par 2 autres liaisons permettant le passage d'un courant relativement faible, à savoir une liaison PP et une liaison CP définies dans la norme IEC 61851.

L'abréviation « PP » renvoie à la dénomination anglaise de « Proximity Pilot » et se traduit généralement en français par « présence prise ».

La liaison PP sert à commander l'état de l'indicateur de fonctionnement en informant que le connecteur est bien relié au point de charge 20.

La liaison CP (« CP » pour « Control Pilot ») permet l'échange d'information entre le point de charge 20 et le véhicule à charger.

Le calculateur 28 est propre à contrôler les points de charge 20 et le multiplexeur 26 pour assurer une charge au(x) véhicule(s) électrique(s) garés aux emplacements correspondant.

Le calculateur 28 communique avec chacun de ces éléments par un protocole spécifique.

Par exemple, le calculateur 28 communique avec les points de charge 20 dans le protocole OCPP tandis que le calculateur 28 communique avec le multiplexeur 26 par un autre protocole.

Les protocoles RS232, RS485, CAN, Modbus, I2C ou encore MQTT sont des exemples de protocoles pouvant être utilisés par le calculateur 28 pour communiquer avec le multiplexeur 26.

Le calculateur 28 obtient aussi les informations obtenues par l'interface utilisateur 18 et est propre à les communiquer au système de contrôle externe 14.

Le calculateur 28 est également propre à interagir avec le système de contrôle externe 14.

En ce sens, le calculateur 28 sert d'interface entre le système de contrôle externe 14, les points de charge 20 et le multiplexeur 26.

Le calculateur 28 communique avec le système de contrôle externe 14 selon le protocole OCCP.

Du point de vue du système de contrôle externe 14, le calculateur 28 est vu comme un ensemble de N connecteurs fonctionnant simultanément à contrôler en fonction de la demande de l'utilisateur.

Le calculateur 28 se comporte ainsi vis-à-vis du système de contrôle externe 14 comme une borne de charge avec de multiples connecteurs alors que pour les points de charge 20, le calculateur 28 est vu comme le système de contrôle externe 14.

Selon un mode de réalisation préféré, pour mettre en œuvre un tel fonctionnement, les instructions de charge provenant du système de contrôle externe 14 comportent des instructions de contrôle des points de charge 20 comme si le nombre de points de charge 20 était égal au nombre N. Autrement dit, les instructions provenant du système de contrôle externe 14 sont des instructions à destination de points de charge 20 virtuels.

Le calculateur 28 a pour rôle de convertir ces instructions de contrôle en instructions de contrôle de chaque point de charge 20. Cela revient à dire que le calculateur 28 convertit des instructions « virtuelles » en des instructions « réelles ».

Similairement, le calculateur 28 est propre à convertir des informations provenant des points de charge 20 en informations provenant d'un deuxième nombre de points de charge 20, par exemple N points de charge, et à envoyer les informations converties au système de contrôle externe 14.

Par ailleurs, le système de contrôle externe 14 est propre à identifier l'utilisateur sur la base de l'information lue sur le badge par l'interface utilisateur 18 et à déterminer si l'utilisateur peut avoir accès à la recharge avec l'abonnement dont il dispose.

Si une telle autorisation a eu lieu et ce, pour plusieurs utilisateurs, le calculateur 28 peut alors recevoir du système de contrôle externe 14 des instructions de recharge pour les N connecteurs, même si, en pratique, seulement n seront effectivement en fonctionnement.

Le système de contrôle externe 14 ne se rend donc pas compte que le nombre de points de charge 20 est strictement inférieur au nombre d'interface de charge 24.

Concrètement, cela signifie que le système de contrôle externe 14 demande N charges et qu'en pratique, le calculateur 28 donne l'ordre d'en faire n à un instant t et avec cette contrainte, le calculateur 28 fait successivement les charges jusqu'à ce que l'ensemble des N charges ait été réalisé.

Plus précisément, le calculateur 28 contrôle le multiplexeur 26 et les points de charge 20 pour assurer que les interfaces de charge 24 pour lequel le calculateur 28 a décidé de procéder à une charge soient bien alimentées.

Le calculateur 28 est ainsi propre à recevoir des instructions de charge d'un véhicule par le système de contrôle externe 14 et à contrôler le multiplexeur 26 et au moins un point de charge 20 en fonction des instructions du système de contrôle externe 14.

Lorsque la charge d'un véhicule a progressé, le calculateur 28 vient basculer une autre interface de charge 24 sur le point de charge 20 en envoyant les commandes appropriées au multiplexeur 26. La charge d'un autre véhicule commence.

Ce basculement d'une interface de charge 24 à un autre est masquée au système de contrôle externe 14.

Dans ce cas, le calculateur 28 effectue les charges - au moins partielles - de manière successive.

Dans des modes de réalisation plus élaborés, le calculateur 28 est propre à déterminer une stratégie de basculement optimisé et à la mettre en œuvre ensuite.

Une telle stratégie de basculement correspond à une gestion optimisée des recharges et peut notamment prendre en compte des priorités entre véhicules.

Par exemple, effectuer une charge complète n'est pas forcément impératif avant de basculer entre les véhicules, mais peut se limiter par exemple à un certain niveau de charge.

Une telle gestion est souvent désignée sous l'appellation anglaise correspondante de « smart charging ».

Dans chacun des cas, le calculateur 28 est propre à déterminer une stratégie de basculement comportant l'ensemble des ordres de basculement du multiplexeur 26 à partir des ordres reçus du système.

De préférence, le calculateur 28 est propre à optimiser la stratégie de basculement pour qu'au moins une contrainte soit respectée.

Une contrainte est, par exemple, que la puissance totale consommée par l'installation de recharge 12 reste inférieure ou égale à une puissance prédéfinie. La puissance prédéfinie peut être la puissance maximale qui est disponible, une valeur imposée par une autorité telle que le gestionnaire du réseau ou bien correspondre à la production d'une centrale locale alimentant l'installation de recharge 12.En variante ou en complément, le calculateur 28 est propre à optimiser la stratégie de basculement pour qu'au moins un objectif soit atteint.

Par exemple, un objectif est de maximiser la puissance utilisée (et ainsi minimiser le temps de la recharge) ou de baisser le coût de fourniture de l'électricité.

Un objectif peut également être un objectif d'état de charge minimum à obtenir au plus vite pour tous les véhicules, par exemple un état de charge de 80%.

Un autre type d'objectif est un objectif dépendant d'au moins un utilisateur du véhicule électrique à charger.

Par exemple, l'objectif dépend de l'état de charge du véhicule à l'arrivée, de la durée d'immobilisation prévue du véhicule (qui peut dépendre notamment des choix de l'utilisateur).

Ainsi, il est obtenu une station fonctionnant comme si chaque place de parking était électrifiée par un point de charge 20 respectif alors que ce n'est pas le cas.

De plus, aucun composant spécifique n'est utilisé pour permettre un tel fonctionnement.

En effet, par rapport à une installation classique, seul un multiplexeur 26 et un calculateur 28 sont ajoutés, les autres composants étant des composants qui seraient présents sur une station munie de N points de charge 20.

La station permet ainsi de faire baisser drastiquement le coût marginal d'électrification d'une place de parking.

En outre, il est aisé de faire évoluer la station en fonction des besoins, et/ou de faire évoluer une station préexistante selon une démarche de rétrofit.

Typiquement, si le gestionnaire de l'infrastructure fait évoluer son alimentation électrique et peut se permettre un plus grand nombre de recharges simultanées, il suffira d'ajouter des nouveaux points de charge 20.

Selon un autre exemple, à un nombre de points de charge 20 constant, il est possible d'augmenter le nombre de places équipés en ajoutant simplement des interfaces de charge 24 sur d'autres emplacements.

Ces avantages peuvent être renforcés en ajoutant à l'installation des fonctionnalités supplémentaires.

Par exemple, le calculateur 28 est également propre à déterminer si une interface de charge 24 délivre une tension monophasée ou une tension triphasée.

Cela permet, en effet, d'obtenir plus grande granularité de contrôle sur la puissance totale consommée et une meilleure utilisation de la puissance disponible.

Avantageusement, dans le mode de charge monophasée, le contrôleur 28 est également propre à choisir une phase parmi les phases disponibles du réseau à partir de laquelle l'énergie sera délivrée pour réaliser la ou les charges de points de charge 20.

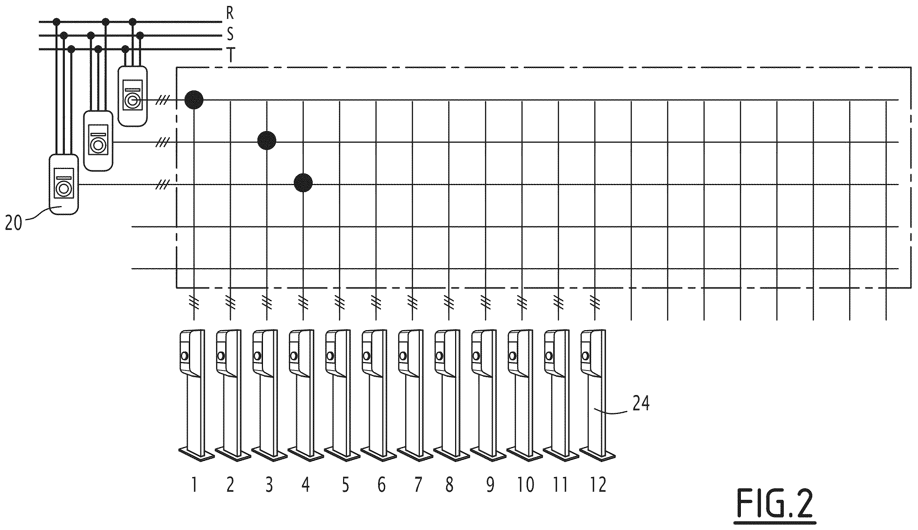

Cela va maintenant être illustré en référence à la figure 2.

Dans cet exemple, il est supposé que trois véhicules électriques sont présents devant les interfaces de charge 1, 3 et 4 et souhaitant bénéficier d'une charge à ce moment donné (cela n'exclue pas la présence d'autres véhicules si nécessaire).

Outre le moment de la charge, le calculateur 28 va donc également déterminer si une charge triphasée ou une charge monophasée est appropriée.

Un exemple de stratégie ainsi obtenue est maintenant explicité.

Dans la figure 2, les trois points de charge 20 sont alimentées en triphasé et une rotation des phases a été mise en place, de sorte que :
- le premier point de charge 20 utilise la phase R comme première phase, puis la phase S comme deuxième phase, puis la phase T comme troisième phase,
- le deuxième point de charge 20 utilise la phase S comme première phase, puis la phase T comme deuxième phase, puis la phase R comme troisième phase, et
- le troisième point de charge 20 utilise la phase T comme première phase, puis la phase R comme deuxième phase, puis la phase S comme troisième phase.

En outre, chaque point de charge 20 est ici relié par le multiplexeur 26 à un point de charge 20 respectif.

Plus précisément, le premier point de charge 20 est relié à la première interface de charge 24, le deuxième point de charge 20 est relié à la troisième interface de charge 24 et le troisième point de charge 20 est relié à la quatrième interface.

Pour bien montrer l'intérêt d'un basculement entre monophasé et triphasé, un exemple numérique est maintenant développé.

Dans cet exemple, il est supposé que le réseau électrique est capable de fournir 32 A par phase et que :
- le véhicule A est équipé d'un chargeur triphasé consommant entre 8A et 32A est à charger au niveau de la première interface de charge 24,
- le véhicule B est équipé d'un chargeur monophasé consommant entre 8A et 32A doit être chargé au niveau de la troisième interface de charge 24, et
- le véhicule C est équipé d'un chargeur triphasé consommant entre 8A et 32A est à charger au niveau de la quatrième interface de charge 24.

Par ailleurs, le raisonnement qui suit sera fait en supposant que la station de recharge 10 est pilotée en courant et que les puissances délivrées sont directement proportionnelles aux courants appliqués.

Une stratégie possible serait de charger le véhicule A à 32A mais la charge du véhicule A va alors consommer tout ce que le réseau électrique peut fournir et les véhicules B et C devront attendre avant de charger.

Une autre stratégie serait de charger chaque phase à 16A sachant que le seul impératif est de charger le véhicule A en triphasé.

L'application de cette stratégie conduit au bilan énergétique du tableau suivant

**[Table 1]**

| | Phase R (en ampères) | Phase S (en ampères) | Phase T (en ampères) | Puissance par véhicule (kW) |
|---|---|---|---|---|
| Véhicule A | 16 | 16 | 16 | 11,04 |
| Véhicule B | 0 | 16 | 0 | 3,68 |
| Véhicule C | 0 | 0 | 16 | 3,68 |
| Puissance par phase (kW) | 3,68 | 7,36 | 7,36 | |

Cela conduit à une puissance totale consommée de 18,4 kW alors qu'il est possible d'utiliser 22,08 kW, soit une efficacité de 83%.

En imposant au véhicule A de charger en monophasé, cette efficacité peut être augmentée comme le montre le tableau suivant :

**[Table 2]**

| | Phase R (en ampères) | Phase S (en ampères) | Phase T (en ampères) | Puissance par véhicule (kW) |
|---|---|---|---|---|
| Véhicule A | 32 | 0 | 0 | 7,36 |
| Véhicule B | 0 | 32 | 0 | 7,36 |
| Véhicule C | 0 | 0 | 32 | 7,36 |
| Puissance par phase (kW) | 7,36 | 7,36 | 7,36 | |

Cela conduit à une efficacité en puissance de 100%.

Le choix de charger en monophasé ou en triphasé permet donc une optimisation de l'utilisation des points de charge 20 par le calculateur 28.

Ainsi, il est avantageux que lorsque chaque interface de charge 24 est propre à fonctionner selon un mode de charge monophasée et selon un mode de charge triphasée, la stratégie de basculement optimisée par le calculateur 28 détermine également des ordres de basculement entre les modes de charge.

## Revendications

1. Installation de recharge (12) pour véhicules électriques, l'installation de recharge (12) comprenant :
- un premier nombre de point de charge (20), le premier nombre étant supérieur ou égal à 1,
- un deuxième nombre d'interfaces de charge (24), le deuxième nombre étant supérieur ou égal à 2, chaque interface de charge (24) comportant un connecteur adapté pour être branché à un véhicule électrique pour permettre la recharge du véhicule électrique, le deuxième nombre étant strictement supérieur au premier nombre,
- un multiplexeur (26) propre à relier les interfaces de charge (24) à l'au moins un point de charge (20), et
- un calculateur (28), le calculateur (28) étant propre à recevoir des instructions de charge d'un véhicule électrique par un système de contrôle externe (14) et à contrôler le multiplexeur (26) et l'au moins un point de charge (20) en fonction des instructions du système de contrôle externe (14), les instructions de charge du système de contrôle externe (14) comportant des instructions de contrôle d'un deuxième nombre de points de charge (20), le calculateur (28) étant propre à convertir les instructions de contrôle du système de contrôle externe (14) en instructions de contrôle de chaque point de charge (20)..

2. Installation de recharge selon la revendication 1, dans laquelle le calculateur (28) est propre à communiquer avec le système de contrôle externe (14) et l'au moins un point de charge (20) par un protocole OCPP.

3. Installation de recharge selon la revendication 1 ou 2, dans laquelle le calculateur (28) est propre à convertir des informations provenant des points de charge (20) en informations provenant d'un deuxième nombre de points de charge (20) et à envoyer les informations converties au système de contrôle externe (14).

4. Installation de recharge selon l'une quelconque des revendications 1 à 3, dans laquelle, le multiplexeur (26) est propre à basculer au moins un point de charge (20) d'une interface de charge (24) à une autre interface de charge (24) à réception d'un ordre de basculement, le calculateur (28) étant propre à déterminer une stratégie de basculement comportant l'ensemble des ordres de basculement du multiplexeur (26) et des points de charge (20) à partir des ordres reçus du système de contrôle externe (14).

5. Installation de recharge selon la revendication 4, dans laquelle le calculateur (28) est propre à optimiser la stratégie de basculement pour qu'au moins une contrainte soit respectée et/ou un objectif soit atteint.

6. Installation de recharge selon la revendication 5, dans laquelle une contrainte est que la puissance totale consommée par l'installation de recharge (12) reste inférieure ou égale à une puissance prédéfinie.

7. Installation de recharge selon l'une quelconque des revendications 4 à 6, dans laquelle le calculateur (28) est propre à optimiser la stratégie de basculement pour qu'au moins un objectif soit atteint.

8. Installation de recharge selon la revendication 7, dans laquelle un objectif est de maximiser la puissance utilisée par l'installation de recharge (12).

9. Installation de recharge selon la revendication 7 ou 8, dans laquelle un objectif est un objectif dépendant d'au moins un utilisateur du véhicule électrique à charger.

10. Installation de recharge selon l'une quelconque des revendications 4 à 9 dans laquelle chaque interface de charge (24) est propre à fonctionner selon un mode de charge monophasée et selon un mode de charge triphasée, la stratégie de basculement déterminant également des ordres de basculement entre les modes de charge.

11. Installation de recherche selon la revendication 10, dans laquelle, dans le mode de charge monophasée, le calculateur (28) est également propre à choisir une phase parmi les phases disponibles pour réaliser la charge.

12. Installation de recharge selon l'une quelconque des revendications 1 à 11, dans laquelle chaque interface de charge (24) comporte au moins un connecteur et un indicateur de fonctionnement.

13. Installation de recharge selon l'une quelconque des revendications 1 à 12, dans laquelle l'installation de recharge (12) comporte, en outre, une interface utilisateur (18), le calculateur (28) étant propre à transmettre des informations obtenues par l'interface utilisateur (18) au système de contrôle externe (14).

14. Station de recharge (10) pour véhicules électriques, la station de recharge (10) comprenant :
- un système de contrôle externe (14), et
- une installation de recharge (12) selon l'une quelconque des revendications 1 à 13.
